# EUROPEAN PATENT APPLICATION

(11) **EP 3 528 265 A1**
(43) Date of publication of application: **21.08.2019**
(21) Application number: 19153538.4
(22) Date of filing: 24.01.2019
(51) Int. Cl.: H01F 3/14, H01F 27/38, H01F 30/12, H01F 37/00, H02M 3/28

(54) **MAGNETIC COMPONENT, CONVERTER AND INDUCTOR**

(30) Priority: 09.02.2018 CN 201810134988
(71) Applicant: Delta Electronics (Shanghai) Co., Ltd., 201209 Shanghai (CN)
(72) Inventor: LU, Zengyi, SHANGHAI, 201209 (CN); LIU, Xinwei, SHANGHAI, 201209 (CN); LIU, Shiwei, SHANGHAI, 201209 (CN); GUO, Xingkuan, SHANGHAI, 201209 (CN); ZHANG, Jinfa, SHANGHAI 201209 (CN)
(74) Representative: Cabinet Beau de Loménie

(57) **Abstract**

The present disclosure relates to a magnetic component, a converter and an inductor. The magnetic component includes a magnetic core (110) including a first winding window (A), a second winding window (B) and a third winding window (C); and a winding (120) including a first winding (121), a second winding (122) and a third winding (123), which are wound in the first winding window, the second winding window and the third winding window, respectively, wherein when an alike current flows through the first winding, the second winding and the third winding, magnetic fluxes (Φ_{A},Φ_{B}) respectively generated in magnetic core units forming the first winding window and the second winding window are superposed on a first common magnetic column (111) therebetween, and magnetic fluxes (Φ_{B},Φ_{C}) respectively generated in magnetic core units forming the second winding window and the third winding window are superposed on a second common magnetic column (112) therebetween.

## Description

### TECHNICAL FIELD

The present disclosure relates to a magnetic component, an inverter, and an inductor, and more particularly, to a magnetic component, an inverter and an inductor having a high power density.

### BACKGROUND

Generally, magnetic components occupy a large proportion in an overall volume and weight of a power supply system. Therefore, how to reduce the volume and weight of the magnetic components becomes an important research topic to improve the power density of the power supply system (such as a three-phase LLC resonant converter).

It should be noted that the information disclosed in the above background section is only for enhancement of understanding of the background of the present disclosure and therefore may include information that does not constitute prior art known to those of ordinary skill in the art.

### SUMMARY

Aspects of the present disclosure provide a magnetic component, an inverter and an inductor having a high power density. Aspects of the present disclosure further provide a magnetic component, an inverter and an inductor having a smaller magnetic core volume.

According to an aspect of the present disclosure, there is provided a magnetic component, including: a magnetic core, including a first winding window, a second winding window and a third winding window, wherein a first common magnetic column is shared by the first winding window and the second winding window, and a second common magnetic column is shared by the second winding window and the third winding windows; and a winding, including a first winding, a second winding and a third winding, wherein the first winding, the second winding and the third winding are wound in the first winding window, the second winding window and the third winding window, respectively, wherein when an alike current flows through the first winding, the second winding and the third winding, magnetic flux generated in magnetic core unit forming the first winding window and magnetic flux generated in magnetic core unit forming the second winding window are superposed on the first common magnetic column, and magnetic flux generated in magnetic core unit forming the second winding window and magnetic flux generated in magnetic core unit forming the third winding window are superposed on the second common magnetic column.

According to an aspect of the present disclosure, there is provided a magnetic component, including: a magnetic core, including a first winding window to an M-th winding window, and a common magnetic column is shared by two adjacent winding windows among the first winding window to the M-th winding window; and a winding, including a first winding to an N-th winding, and each of the first winding to the N-th winding respectively corresponds to one of the first winding window to the M-th winding window and is wound thereon, wherein when an alike current flows through the first winding to the N-th winding, magnetic fluxes respectively generated in magnetic core units forming two adjacent winding windows among the first winding window to the M-th winding window are superposed on the common magnetic column, where M, N is a positive integer greater than or equal to 2.

According to an aspect of the present disclosure, there is provided a three-phase LLC resonant converter, including the magnetic component according to the above aspects of the present disclosure, wherein the first winding, the second winding and the third winding respectively are used to form primary windings of a three-phase transformer; and the three-phase transformer further includes a first secondary winding, a second secondary winding and a third secondary winding, and the first secondary winding, the second secondary winding and the third secondary winding are wound on identical magnetic columns as the first winding, the second winding and the third winding, respectively.

According to an aspect of the present disclosure, there is provided a three-phase inductor, including the magnetic component according to the above aspects of the present disclosure.

It is to be understood that both the foregoing general description and the following detailed description are exemplary and explanatory only and are not restrictive of the present disclosure.

This section provides a summary of various implementations or examples of techniques described in the present disclosure, and is not a comprehensive disclosure of the full scope or all features of the disclosed technology.

### BRIEF DESCRIPTION OF THE DRAWINGS

The accompanying drawings herein are incorporated in and constitute a part of this specification, illustrate embodiments consistent with the present disclosure, and together with the description serve to explain the principles of the disclosure. Obviously, the drawings in the following description are merely some embodiments of the present disclosure, and those skilled in the art can also obtain other drawings based on these drawings without any creative work.
Fig. 1 schematically shows a schematic view of a magnetic component according to an embodiment of the present disclosure;
Fig. 2 schematically shows magnetic fluxes generated by each winding and magnetic fluxes in common magnetic columns when the magnetic component shown in Fig. 1 is energized;
Fig. 3 schematically shows a schematic view of a magnetic component according to an embodiment of the present disclosure;
Fig. 4 schematically shows a schematic view of a magnetic component according to an embodiment of the present disclosure;
Fig. 5 schematically shows a schematic view of a magnetic component according to an embodiment of the present disclosure;
Fig. 6 schematically shows a schematic of a three-phase LLC resonant converter according to an embodiment of the present disclosure;
Fig. 7 schematically shows a schematic diagram of a three-phase transformer according to an embodiment of the present disclosure; and
Fig. 8 schematically shows a schematic diagram of a three-phase transformer according to an embodiment of the present disclosure.

### DETAILED DESCRIPTION

Exemplary embodiments will now be described more fully with reference to the drawings. The exemplary embodiments, however, may be implemented in various forms, and should not be construed as been limited to the implementations set forth herein; instead, the implementations are provided such that the present disclosure will be through and complete, and will fully convey the concept of exemplary embodiments to those skilled in the art. The features, structures or characteristics described herein can be combined in one or more embodiments in any appropriate way. In the description hereinafter, many specific details are provided for fully understanding of the embodiments of the present disclosure. However, it will be appreciated by those skilled in the art that the technical solution of the present disclosure can be practiced without one or more of the specific details, or with other methods, components, devices, or steps, etc. In addition, known technical solutions will not be illustrated or described in detail, to avoid obscuration of the aspects of the present disclosure.

In addition, the drawings are merely schematic illustrations of the present disclosure and are not necessarily drawn to scale. The same reference numerals in the drawings denote the same or similar parts, and their repeated description will be omitted. Some of the block diagrams shown in the figures are functional entities and do not necessarily have to correspond to physically or logically independent entities. These functional entities may be implemented in software, or implemented in one or more hardware modules or integrated circuits, or implemented in different network and/or processor devices and/or microcontroller devices.

In a conventional three-phase LLC resonant converter, three resonant inductors and three transformers use separate magnetic cores and form separate closed magnetic circuits respectively, which will increase the overall volume and weight of the power supply system, and increase manufacturing cost of the power supply system. In addition, when the circuit operates, a magnetic core of a magnetic component of each converter will correspondingly produce a large magnetic loss. Therefore, when a plurality of magnetic components in the three-phase LLC resonant converter use separate magnetic cores and form separate closed magnetic circuits respectively, the conventional power supply system will have a large magnetic loss.

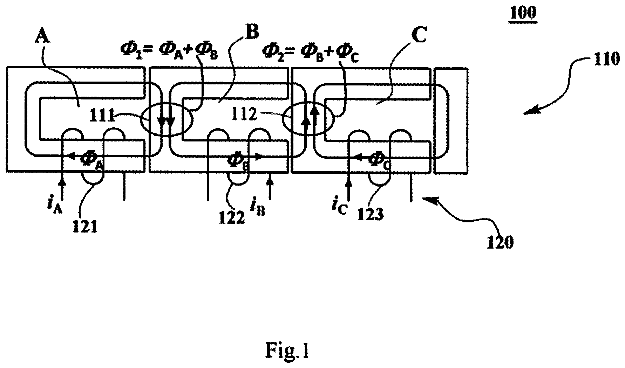

In the present exemplary embodiment, a magnetic component is provided. Referring to Fig. 1, the magnetic component 100 includes: a magnetic core 110, including a first winding window A, a second winding window B and a third winding window C, wherein a first common magnetic column 111 is shared by the first winding window A and the second winding window B, and a second common magnetic column 112 is shared by the second winding window B and the third winding windows C; and a winding 120, including a first winding 121, a second winding 122 and a third winding 123, wherein the first winding 121 is wound in the first winding window A, the second winding 122 is wound in the second winding window B, and the third winding 123 is wound in the third winding window C.

In this embodiment, referring to Fig. 1, it is also shown that when the first winding 121, the second winding 122 and the third winding 123 are respectively supplied with currents i_{A}, i_{B}, and i_{C}, magnetic fluxes Φ_{A}, Φ_{B}, and Φ_{C} are generated in magnetic core units respectively forming the first winding window A, the second winding window B and the third winding window C in the magnetic core 110. As shown in Fig. 1, when an alike current flows through the first winding 121, the second winding 122 and the third winding 123, magnetic flux Φ_{A} generated in magnetic core unit forming the first winding window A and magnetic flux Φ_{B} generated in magnetic core unit forming the second winding window B are superposed on the first common magnetic column 111, and magnetic fluxe Φ_{B} generated in magnetic core unit forming the second winding window B and magnetic fluxe Φ_{C} generated in magnetic core unit forming the third winding window C are superposed on the second common magnetic column 112.

More specifically, referring to Fig. 1, the magnetic flux Φ_{A} generated in the magnetic core unit forming the first winding window A and the magnetic flux Φ_{B} generated in the magnetic core unit forming the second winding window B are in an opposite direction, and the magnetic flux Φ_{B} generated in the magnetic core unit forming the second winding window B and the magnetic flux Φ_{C} generated in the magnetic core unit forming the third winding window C are in an opposite direction. In addition, the magnetic flux Φ_{A} generated in the magnetic core unit forming the first winding window A and the magnetic flux Φ_{C} generated in the magnetic core unit forming the third winding window C are in an identical direction. For example, as shown in FIG. 1, the magnetic flux Φ_{A} is in a clockwise direction, the magnetic flux Φ_{B} is in a counterclockwise direction, and the magnetic flux Φ_{C} is in the clockwise direction.

In addition, in the present embodiment, a direction of magnetic flux through the first common magnetic column 111 is opposite to that of magnetic flux through the second common magnetic column 112. For example, referring to Fig. 1, the magnetic flux through the first common magnetic column 111 is in a downward direction and the magnetic flux through the second magnetic column 112 is in an upward direction.

In the present embodiment, the first common magnetic column 111 and the second common magnetic column 112 are respectively shared by winding windows adjacent thereto, and therefore, the first common magnetic column 111 and the second common magnetic column 112 are preferable to have a low magnetic resistance. In one embodiment, magnetic resistances of the first common magnetic column 111 and the second common magnetic column 112 may be reduced by providing no air gap on the first common magnetic column 111 and the second common magnetic column 112.

In this embodiment, the term "alike current" may indicate that directions of the currents are the same, for example, all being positive currents or all being negative currents. In other embodiments, the alike current may also mean that the magnitude and phase of the current are the same. In addition, those skilled in the art should understand that although the term "alike current" is used in this embodiment to define an arrangement of the magnetic core 110 and the winding 120, the current flowing into each winding during the operation of the magnetic component is not limited to the same current as described above, but can be set according to actual needs. In other words, for example, the magnetic fluxes as shown in Fig. 1 is the magnetic flux generated in the magnetic core when i_{A}, i_{B}, and i_{C} are the same current, and in actual operation, the magnetic flux may change in real time as change of the operating currents i_{A}, i_{B}, and i_{C}.

In the present embodiment, the first winding 121, the second winding 122 and the third winding 123 may have the same turns. When the first winding 121, the second winding 122 and the third winding 123 have the same turns, and when current i_{A} flowing through the first winding 121 is identical to current i_{B} flowing through the second winding 122 and current i_{C} flowing through the third winding 123, the magnetic fluxes Φ_{A}, Φ_{B}, and Φ_{C} generated correspondingly are also the same with each other.

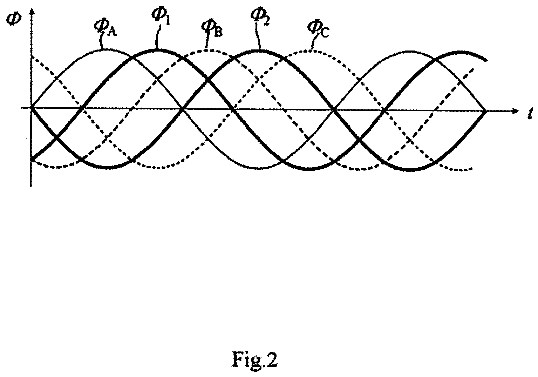

For example, Fig. 2 schematically shows magnetic fluxes Φ_{A}, Φ_{B}, and Φ_{C} generated by each winding and magnetic fluxes Φ₁ and Φ₂ in common magnetic columns when the magnetic component shown in Fig. 1 is energized. As shown in Fig. 2, when i_{A}, i_{B}, and i_{C} are sinusoidal currents in a phase difference of 120° with each other, the correspondingly generated Φ_{A}, Φ_{B}, and Φ_{C} also satisfy the sinusoidal variation rule. In this case, since the magnetic fluxes generated by the first winding 121 and the second winding 122 on the first common magnetic column 111 are in superposed relationships, and the magnetic fluxes generated by the second winding 122 and the third winding 123 on the second common magnetic column 112 are also in superposed relationships. Magnetic fluxes Φ₁ and Φ₂ on the first common magnetic column 111 and the second common magnetic column 112 also satisfy the sinusoidal variation rule. Besides, since the magnetic fluxes are in a phase difference of 120° with each other, amplitudes of the magnetic fluxes Φ₁ and Φ₂ are the same as those of the magnetic fluxes Φ_{A}, Φ_{B}, and Φ_{C}. In the present embodiment, since the magnetic fluxes on the common magnetic column are in superposed relationships, amplitudes of the magnetic fluxes on the common magnetic columns are the same as those of the magnetic fluxes in each winding window, and thus it is advantageous to reduce the magnetic flux passing through the common magnetic columns, thereby avoiding the increase of the volume of the common magnetic columns and the increase of the loss on the common magnetic columns, which is advantageous for realizing a smaller-sized magnetic component.

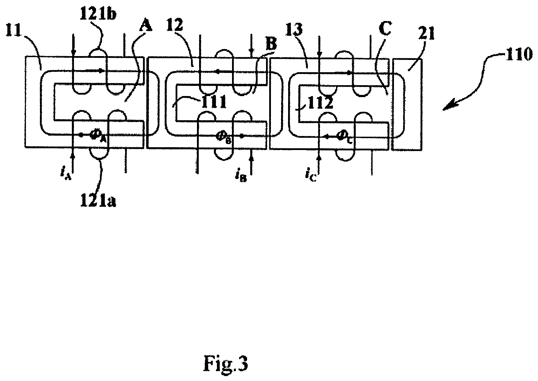

Fig. 3 schematically shows a schematic view of a magnetic component according to an embodiment of the present disclosure. The embodiment shown in Fig. 3 has a substantially similar structure to the embodiment shown in Fig. 1 described above, and thus the description of the overlapping part will be omitted.

In this embodiment, each of the first winding 121, the second winding 122 and the third winding 123 has at least one sub-winding, and the at least one sub-winding is respectively wound on a same-position magnetic column or different-position magnetic columns on the magnetic core units forming the first winding window A, second winding window B and the third winding window C, and wherein when an alike current flows through the windings, magnetic flux loops generated by the at least one sub-winding wound on one winding window in a magnetic core unit of the one winding window have an identical direction.

More specifically, referring to Fig. 3, the first winding includes a first sub-winding 121a and a second sub-winding 121b. The first sub-winding 121a and the second sub-winding 121b are wound on two different-position magnetic columns of the first winding window A, respectively. As shown in Fig. 3, when the first sub-winding 121a and the second sub-winding 121b are respectively supplied with the same current (for example, the current i_{A}), the magnetic flux loop Φ_{A} generated by them in the magnetic core unit of the winding window A has the same direction (for example, both in clockwise directions). Similarly, the second winding and the third winding also have a similar configuration, and repeated description will be omitted again.

In this embodiment, referring to Fig. 3, the magnetic core 110 may include a first U-shaped magnetic core unit 11, a second U-shaped magnetic core unit 12, a third U-shaped magnetic core unit 13 and a first I-shaped magnetic core unit 21, and three U-shaped magnetic core units are sequentially arranged along the same direction, wherein the first U-shaped magnetic core unit 11 and a bottom of the second U-shaped magnetic core unit 12 are used to form the first winding window A, the second U-shaped magnetic core unit 12 and a bottom of the third U-shaped magnetic core unit 13 are used to form the second winding window B, the third U-shaped magnetic core unit 13 and the first I-shaped magnetic core unit 21 constitute the third winding window C, wherein the bottom of the second U-shaped magnetic core unit 12 is defined as the first common magnetic column 111, and the bottom of the third U-shaped magnetic core unit 13 is defined as the second common magnetic column 112.

In the present embodiment, the first winding, the second winding and the third winding are respectively wound on side columns of the first U-shaped magnetic core unit 11 to the third U-shaped magnetic core unit 13. However, the present disclosure is not limited thereto, and the first winding, the second winding and the third winding may also be disposed on the corresponding winding windows in other manners.

An example of using the U-shaped magnetic core unit and the I-shaped magnetic core unit to construct the magnetic core 110 is shown in the embodiment of Fig. 3, but the present disclosure is not limited thereto. Specifically, a shape of the magnetic core unit constituting the magnetic core 110 is not limited to the specific shape shown in the drawing but may be constituted by a magnetic core unit having a similar shape. In addition, the shape of the magnetic core unit is not limited to the U-shape or the I-shape shown in the drawing either, and variations based on the U-shaped magnetic core unit and the I-shaped magnetic core unit may also be considered as the U-shaped magnetic core unit and the I-shaped magnetic core unit. For example, although the drawing shows that the right-angled corners substantially perpendicular to each other are formed between the two side columns and the bottom of the U-shaped magnetic core unit, the disclosure is not limited thereto. A smooth transition can also be formed between the two side columns and the bottom of the U-shaped magnetic core unit, so that the U-shaped magnetic core unit has a C-like shape.

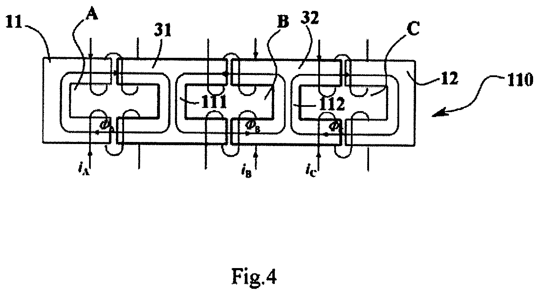

Fig. 4 schematically shows a schematic view of a magnetic component according to an embodiment of the present disclosure. The embodiment shown in Fig. 4 has a substantially similar structure to the embodiment shown in Fig. 1 described above, and thus the description of the overlapping part will be omitted.

In this embodiment, referring to Fig. 4, the magnetic core 110 may include a first U-shaped magnetic core unit 11, a second U-shaped magnetic core unit 12, a first H-shaped magnetic core unit 31, and a second H-shaped magnetic core unit 32, wherein the first U-shaped magnetic core unit 11 and the first H-shaped magnetic core unit 31 are used to form the first winding window A, the first H-shaped magnetic core unit 31 and the second H-shaped magnetic core unit 32 are used to form the second winding window B, the second H-shaped magnetic core unit 32 and the second U-shaped magnetic core unit 12 are used to form the third winding window C, wherein a central column of the first H-shaped magnetic core unit 31 is defined as the first common magnetic column 111, and a central column of the second H-shaped magnetic core unit 32 is defined as the second common magnetic column 112.

In this embodiment, the first winding is wound on side columns of the first U-shaped magnetic core unit 11 and the first H-shaped magnetic core unit 31, the second winding is wound on side columns of the first H-shaped magnetic core unit 31 and the second H-shaped magnetic core unit 32, and the third winding is wound on side columns of the second H-shaped magnetic core unit 32 and the second U-shaped magnetic core12.

According to the present embodiment, the magnetic core unit forming the first winding window A, the magnetic core unit forming the first winding window B and the magnetic core unit forming the third winding window C respectively have air gaps, and the first winding, the second winding and the third winding cover the air gaps respectively. Specifically, referring to Fig. 4, a first winding (including two sub-windings) is wound on the first U-shaped magnetic core unit 11 forming the first winding window A and the side column of the first H-shaped magnetic core unit 31. In the embodiment, the first U-shaped magnetic core unit 11 and the side column of the first H-shaped magnetic core unit 31 are opposed to each other and separated from each other by a certain gap, so that an air gap is formed. Besides, the first winding is formed to cover the air gap. A second winding (including two sub-windings) is wound on the first H-shaped magnetic core unit 31 forming the second winding window B and the side column of the second H-shaped magnetic core unit 32. In the embodiment, the first H-shaped magnetic core unit 31 and the side column of the second H-shaped magnetic core unit 32 are opposed to each other and separated from each other by a certain gap, so that an air gap is formed. Besides, the second winding is formed to cover the air gap. A third winding (including two sub-windings) is wound on the second H-shaped magnetic core unit 32 forming the third winding window C and the side column of the second U-shaped magnetic core unit 12. In the embodiment, the second H-shaped magnetic core unit 32 and the side column of the second U-shaped magnetic core unit 12 are opposed to each other and separated from each other by a certain gap, so that an air gap is formed. Besides, the third winding is formed to cover the air gap. In this case, since the windings cover the air gaps, magnetic flux leakage generated at the air gap can be prevented. Therefore, it is beneficial to avoid external leakage of the magnetic field and improve the reliability of the power supply system.

An example of using the U-shaped magnetic core unit and the H-shaped magnetic core unit to construct the magnetic core 110 is shown in the embodiment of Fig. 4, but the present disclosure is not limited thereto. Specifically, a shape of the magnetic core unit constituting the magnetic core 110 is not limited to the specific shape shown in the drawing but may be constituted by a magnetic core unit having a similar shape. In addition, the shape of the magnetic core unit is not limited to the U-shape or the H-shape shown in the drawing either, and variations based on the U-shaped magnetic core unit and the H-shaped magnetic core unit may also be considered as the U-shaped magnetic core unit and the H-shaped magnetic core unit. For example, although the drawing shows that the right-angled corners substantially perpendicular to each other are formed between the two side columns and the bottom of the U-shaped magnetic core unit, the disclosure is not limited thereto. A smooth transition can also be formed between the two side columns and the bottom of the U-shaped magnetic core unit, so that the U-shaped magnetic core unit has a C-like shape. In addition, although the side columns and the central column of the H-shaped magnetic core unit shown in the drawing are substantially perpendicular to each other and the lengths of the two side columns are substantially the same, the disclosure is not limited thereto. A smooth transition may also exist between the side columns and the central column of the H-shaped magnetic core unit, and the lengths of the two side columns may also differ from each other. For example, more specifically, one of the side columns in the H-shaped magnetic core unit may have a shorter length, that is, having a shape similar to the lower-case h. In addition, it should also be understood that in the present embodiment, the length of the side columns of the H-shaped magnetic core unit can be appropriately lengthened and the length of the side columns of the U-shaped magnetic core units can be appropriately shortened accordingly, so that the U-shaped magnetic core unit have a shape similar to the of the I-shaped magnetic core unit in the foregoing embodiment.

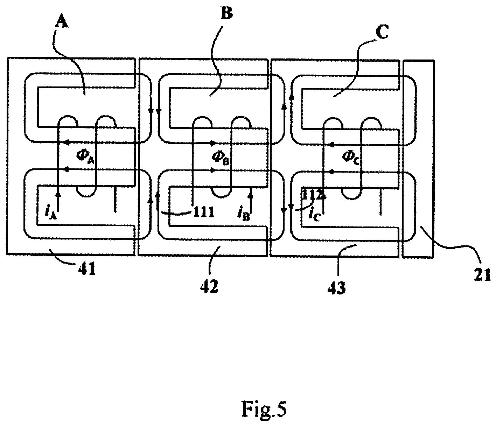

Fig. 5 schematically shows a schematic view of a magnetic component according to an embodiment of the present disclosure. The embodiment shown in Fig. 5 has a substantially similar structure to the embodiment shown in Fig. 1 described above, and thus the description of the overlapping part will be omitted.

In this embodiment, referring to Fig. 5, the magnetic core 100 may include a first E-shaped magnetic core unit 41, a second E-shaped magnetic core unit 42, a third E-shaped magnetic core unit 43 and a first I-shaped magnetic core unit 21, and three E-shaped magnetic core units are sequentially arranged along the same direction, wherein the first E-shaped magnetic core unit 41 and a bottom of the second E-shaped magnetic core unit 42 are used to form the first winding window A, the second E-shaped magnetic core unit 42 and a bottom of the third E-shaped magnetic core unit 43 are used to form the second winding window B, the third E-shaped magnetic core unit 43 and the first I-shaped magnetic core unit 21 are used to form the third winding window C, wherein the bottom of the second E-shaped magnetic core unit 42 is defined as the first common magnetic column 111, and the bottom of the third E-shaped magnetic core unit 43 is defined as the second common magnetic column 112.

In the present embodiment, referring to Fig. 5, the first winding, the second winding and the third winding are wound on central columns of the first E-shaped magnetic core unit 41, the second E-shaped magnetic core unit 42 and the third E-shaped magnetic core unit 43, respectively. However, the present disclosure is not limited thereto, and the first to third windings may also be disposed on other magnetic columns of the respective winding window.

In addition, similar to the foregoing embodiment, in the present embodiment, actual shapes of the E-shaped magnetic core unit and the I-shaped magnetic core unit are not limited to the specific shapes shown in the drawing either.

In the foregoing embodiment, each magnetic component has three winding windows, however, the present disclosure is not limited thereto. In other embodiments of the present disclosure, it may be expanded based on the structure of the magnetic core unit in the foregoing embodiments, thereby obtaining a magnetic component having a plurality of winding windows.

More specifically, in an embodiment of the present disclosure, a magnetic component includes: a magnetic core, including a first winding window to an M-th winding window, and a common magnetic column is shared by two adjacent winding windows among the first winding window to the M-th winding window; and a winding, including a first winding to an N-th winding, and each of the first winding to the N-th winding respectively corresponds to one of the first winding window to the M-th winding window and is wound thereon. In the embodiment, when an alike current flows through the first winding to the N-th winding, magnetic fluxes respectively generated in magnetic core units forming two adjacent winding windows among the first winding window to the M-th winding window are superposed on the common magnetic column, where M, N is a positive integer greater than or equal to 2.

In one embodiment, when an alike current flows through the first winding to the N-th winding, magnetic fluxes respectively generated in magnetic core units forming adjacent winding windows are in an opposite direction.

In one embodiment, each of the first winding to the N-th winding has at least one sub-winding, and the at least one sub-winding is respectively wound on a same-position magnetic column or different-position magnetic columns in the respective magnetic core units forming the first winding window to the M-th winding window, and wherein when an alike current flows through the windings, magnetic flux loops generated by the at least one sub-winding wound on one winding window in the magnetic core unit of the one winding window have an identical direction.

In one embodiment, the magnetic core includes a first U-shaped magnetic core unit to an M-th U-shaped magnetic core unit and a first I-shaped magnetic core unit, wherein an i-th U-shaped magnetic core unit and a bottom of an (i+1)-th U-shaped magnetic core unit are used to form an i-th winding window, the M-th U-shaped magnetic core unit and the first I-shaped magnetic core unit are used to form an M-th winding window, wherein the bottom of the (i+1)-th U-shaped magnetic core unit is defined as the common magnetic column, where i is a positive integer greater than or equal to 1 and less than M, wherein the first winding to the N-th winding are respectively wound on side columns of the first U-shaped magnetic core unit to the M-th U-shaped magnetic core unit.

In one embodiment, the magnetic core includes a first U-shaped magnetic core unit, a second U-shaped magnetic core unit, a first H-shaped magnetic core unit to an (M-1)-th H-shaped magnetic core unit, wherein the first U-shaped magnetic core unit and the first H-shaped magnetic core unit are used to form the first winding window, an i-th H-shaped magnetic core unit and an (i+1)-th H-shaped magnetic core unit are used to form an (i+1)-th winding window, the (M-1)-th H-shaped magnetic core unit and the second U-shaped magnetic core unit are used to form the M-th winding window, wherein a central column of the H-shaped magnetic core unit is defined as the first common magnetic column, where i is a positive integer greater than or equal to 2 and less than (M-1), wherein the first winding to the N-th winding are respectively wound on side columns of the first U-shaped magnetic core unit and the second U-shaped magnetic core unit and on side columns of the first H-shaped magnetic core unit to the (M-1)-th H-shaped magnetic core unit.

In one embodiment, the magnetic core includes a first E-shaped magnetic core unit to an M-th E-shaped magnetic core unit and a first I-shaped magnetic core unit, wherein an i-th E-shaped magnetic core unit and a bottom of an (i+1)-th E-shaped magnetic core unit are used to form an i-th winding window, the M-th E-shaped magnetic core unit and the first I-shaped magnetic core unit are used to form the M-th winding window, wherein the bottom of the (i+1)-th E-shaped magnetic core unit is defined as the common magnetic column, where i is a positive integer greater than or equal to 1 and less than M, wherein the first winding to the N-th winding are respectively wound on central columns of the first E-shaped magnetic core unit to the M-th E-shaped magnetic core unit.

Similar to the foregoing embodiments, in these embodiments, actual shapes of the U-shaped magnetic core unit, the I-shaped magnetic core unit, the H-shaped magnetic core unit and the E-shaped magnetic core unit are not limited to the particular shape shown in the foregoing embodiments of the present disclosure, but may include corresponding variations.

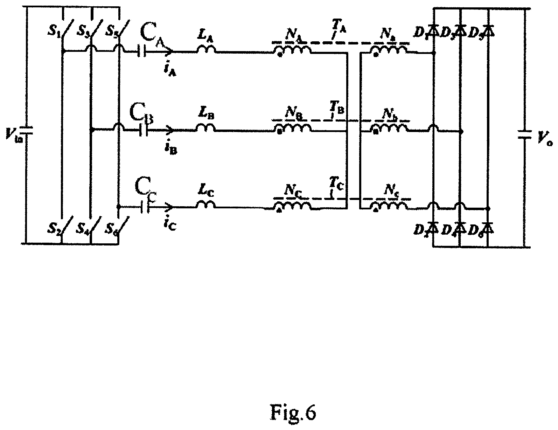

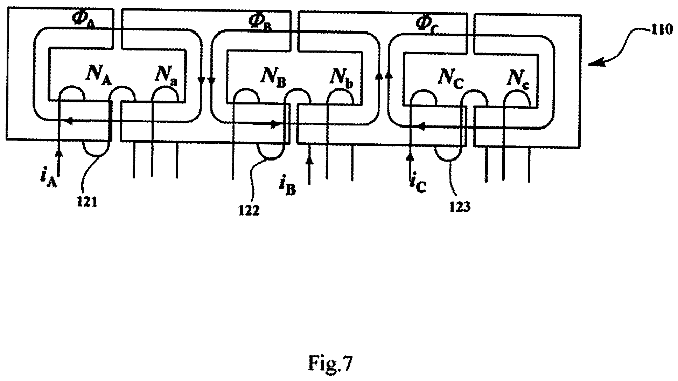

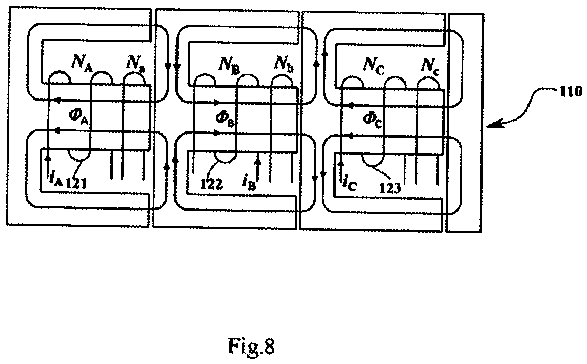

Fig. 6 schematically shows a schematic of a three-phase LLC resonant converter according to an embodiment of the present disclosure. In one embodiment of the present disclosure, the LLC resonant converter shown in Fig. 6 may include a three-phase transformer (which will be described in detail with reference to Figs. 7 and 8 hereinafter).

Referring to Fig. 6, the three-phase LLC resonant converter according to the present disclosure may include three resonant inductors L_{A}, L_{B}, L_{C} and three transformers T_{A}, T_{B}, T_{C}, wherein each the resonant inductors and the transformers may include the magnetic component shown in the embodiments of the present disclosure.

It should be noted that Fig. 6 only schematically shows a topology structure of the LLC resonant converter. However, those skilled in the art should understand that, the LLC resonant converter can also apply other topologies without going beyond the scope of the present disclosure.

Fig. 7 schematically shows a schematic diagram of a three-phase transformer according to an embodiment of the present disclosure. Referring to Fig. 7, the three-phase transformer includes the magnetic component 110 according to the foregoing embodiments of the present disclosure.

According to the present embodiment, the first winding 121, the second winding 122 and the third winding 123 of the magnetic component 110 are used to form primary windings (for example, N_{A}, N_{B}, and N_{C} shown in Fig. 7) of a three-phase transformer, respectively; and the three-phase transformer further includes a first secondary winding Nₐ, a second secondary winding N_{b} and a third secondary winding N_{c}. The first secondary winding Nₐ, the second secondary winding N_{b} and the third secondary winding N_{c} are respectively wound on identical magnetic columns as the first winding 121, the second winding 122 and the third winding 123. In the embodiment, when the three-phase transformer shown in Fig. 7 is applied to the LLC resonant converter shown in Fig. 6, each of the first winding 121, the second winding 122, and the third winding 123 is connected to the corresponding resonant capacitor, respectively. More specifically, the transformer T_{A} jointly constructed by the first winding 121 (the primary winding N_{A}) and the first secondary winding Nₐ may be connected in series with the first resonant capacitor C_{A}. The transformer T_{B} jointly constructed by the second winding 122 (the primary winding N_{B}) and the second secondary winding N_{b} may be connected in series with the second resonant capacitor C_{B}. The transformer T_{C} jointly constructed by the third winding 123 (the primary winding N_{C}) and the third secondary winding N_{c} may be connected in series with the third resonant capacitor C_{C}. It should be understood that embodiments of the present disclosure do not limit the specific connection of the winding in the three-phase LLC resonant converter and the resonant capacitor.

According to the specific topology structure of the three-phase LLC resonant converter, each of the first winding 121, the second winding 122 and the third winding 123 may be connected in series or in parallel with a corresponding resonant capacitor, respectively.

According to the present embodiment, when the three-phase LLC resonant converter operates, operating currents in a phase difference with each other may respectively flow through the first winding 121, the second winding 122 and the third winding 123. More specifically, operating currents flowing through the first winding 121, the second winding 122 and the third winding 123 are in a phase difference of approximately 120° with each other.

According to the present disclosure, the operating current flowing through the first winding 121, the second winding 122, and the third winding 123 may be a periodically varying current, such as at least one of a sine wave, a square wave, a triangular wave and a pulse wave alternating current. However, the present disclosure is not limited thereto, and other waveform currents may also be used as the operating currents of the first winding 121, the second winding 122, and the third winding 123 depending on the specific applications.

Fig. 8 schematically shows a schematic diagram of a three-phase transformer according to an embodiment of the present disclosure. Referring to Fig. 8, the three-phase transformer includes the magnetic component 110 according to the foregoing embodiment of the present disclosure.

The embodiment shown in Fig. 8 is substantially the same as the embodiment shown in Fig. 7, except that the magnetic component similar to the magnetic component 110 shown in Fig. 5 is used in Fig. 8. For a detailed description of the remaining features, reference may be made to the embodiments described above with reference to Fig. 7 and therefore will not be repeated here.

According to the foregoing embodiment of the present disclosure, referring to Fig. 1 and Figs. 3-5, for example, the magnetic component may also be a three-phase inductor.

According to the present embodiment, when the three-phase inductor operates, operating currents in a phase difference with each other may respectively flow through the first winding 121, the second winding 122 and the third winding 123. More specifically, operating currents flowing through the first winding 121, the second winding 122 and the third winding 123 are in a phase difference of approximately 120° with each other.

According to the present disclosure, the operating current flowing through the first winding 121, the second winding 122, and the third winding 123 may be a periodically varying current, such as at least one of a sine wave, a square wave, a triangular wave and a pulse wave alternating current. However, the present disclosure is not limited thereto, and other waveform currents may also be used as the operating currents of the first winding 121, the second winding 122, and the third winding 123 depending on the specific applications.

According to the present disclosure, there is provided a magnetic component, including: a magnetic core, including a first winding window, a second winding window and a third winding window, wherein a first common magnetic column is shared by the first winding window and the second winding window, and a second common magnetic column is shared by the second winding window and the third winding windows; and a winding, including a first winding, a second winding and a third winding, wherein the first winding is wound in the first winding window, the second winding is wound in the second winding window, and the third winding is wound in the third winding window, wherein when an alike current flows through the first winding, the second winding and the third winding, magnetic flux generated in magnetic core unit forming the first winding window and magnetic flux generated in magnetic core unit forming the second winding window are superposed on the first common magnetic column, magnetic flux generated in magnetic core unit forming the second winding window and magnetic flux generated in magnetic core unit forming the third winding window are superposed on the second common magnetic column. In this way, it facilities reducing the magnetic flux in the common magnetic column and thus the magnetic component may have a smaller magnetic core volume.

Other embodiments of the present disclosure will be readily apparent to those skilled in the art from consideration of the specification and practice of the disclosure disclosed herein. This application is intended to cover any variations, uses, or adaptations of the present disclosure which follow the general principles of the present disclosure and include any common knowledge or conventional techniques in this technical field not disclosed by the present disclosure. The description and embodiments are to be considered exemplary only, with the true scope and spirit of the disclosure being indicated by the following claims.

## Claims

1. A magnetic component, comprising:
a magnetic core (110), comprising a first winding window (A), a second winding window (B) and a third winding window (C), wherein a first common magnetic column (111) is shared by the first winding window (A) and the second winding window (B), and a second common magnetic column (112) is shared by the second winding window (B) and the third winding windows (C); and
a winding (120), comprising a first winding (121), a second winding (122) and a third winding (123), wherein the first winding (121), the second winding (122) and the third winding (123) are wound in the first winding window (A), the second winding window (B) and the third winding window (C), respectively;
wherein when an alike current flows through the first winding (121), the second winding (122) and the third winding (123), magnetic flux (Φ_{A}) generated in magnetic core unit forming the first winding window (A) and magnetic flux (Φ_{B}) generated in magnetic core unit forming the second winding window (B) are superposed on the first common magnetic column (111), and magnetic flux (Φ_{B}) generated in magnetic core unit forming the second winding window (B) and magnetic flux (Φ_{C}) generated in magnetic core unit forming the third winding window (C) are superposed on the second common magnetic column (112).

2. The magnetic component of claim 1, wherein when an alike current flows through the first winding (121), the second winding (122) and the third winding (123), the magnetic flux (Φ_{A}) generated in the magnetic core unit forming the first winding window (A) and the magnetic flux (Φ_{B}) generated in the magnetic core unit forming the second winding window (B) are in an opposite direction, and the magnetic flux (Φ_{B}) generated in the magnetic core unit forming the second winding window (B) and the magnetic flux (Φ_{C})generated in the magnetic core unit forming the third winding window (C) are in an opposite direction,
wherein when an alike current flows through the first winding (121), the second winding (122) and the third winding (123), the magnetic flux (Φ_{A}) generated in the magnetic core unit forming the first winding window (A) and the magnetic flux (Φ_{C}) generated in the magnetic core unit forming the third winding window (C) are in an identical direction.

3. The magnetic component of claim 1, wherein when an alike current flows through the first winding (121), the second winding (122) and the third winding (123), a direction of magnetic flux (Φ₁) through the first common magnetic column (111) is opposite to that of magnetic flux (Φ₂) through the second common magnetic column (112).

4. The magnetic component of claim 1, wherein each of the first winding (121), second winding (122) and the third winding (123) has at least one sub-winding, and the at least one sub-winding is respectively wound on a same-position magnetic column or different-position magnetic columns in the respective magnetic core units forming the first winding window (A), second winding window (B) and the third winding window (C), and
wherein when an alike current flows through the first, second and third windings (121, 122, 123), magnetic flux loops generated by the at least one sub-winding wound on one winding window in a magnetic core unit of the one winding window have an identical direction.

5. The magnetic component of claim 1, wherein the magnetic core (110) comprises a first U-shaped magnetic core unit (11), a second U-shaped magnetic core unit (12), a third U-shaped magnetic core unit (13) and a first I-shaped magnetic core unit (21), and three U-shaped magnetic core units (11, 12, 13) are sequentially arranged along the same direction,
wherein the first U-shaped magnetic core unit (11) and a bottom of the second U-shaped magnetic core unit (12) are used to form the first winding window (A), the second U-shaped magnetic core unit (12) and a bottom of the third U-shaped magnetic core unit (13) are used to form the second winding window (B), and the third U-shaped magnetic core unit (13) and the first I-shaped magnetic core unit (21) are used to form the third winding window (C),
wherein the bottom of the second U-shaped magnetic core unit (12) is defined as the first common magnetic column (111), and the bottom of the third U-shaped magnetic core unit (13) is defined as the second common magnetic column (112),
wherein the first winding (121), the second winding (122) and the third winding (123) are respectively wound on side columns of the first U-shaped magnetic core unit (11), the second U-shaped magnetic core unit (12) and the third U-shaped magnetic core unit (13).

6. The magnetic component of claim 1, wherein the magnetic core (110) comprises a first U-shaped magnetic core unit (11), a second U-shaped magnetic core unit (12), a first H-shaped magnetic core unit (31), and a second H-shaped magnetic core unit (32),
wherein the first U-shaped magnetic core unit (11) and the first H-shaped magnetic core unit (31) are used to form the first winding window (A), the first H-shaped magnetic core unit (31) and the second H-shaped magnetic core unit (32) are used to form the second winding window (B), the second H-shaped magnetic core unit (32) and the second U-shaped magnetic core unit (12) are used to form the third winding window (C),
wherein a central column of the first H-shaped magnetic core unit (31) is defined as the first common magnetic column (111), and a central column of the second H-shaped magnetic core unit (32) is defined as the second common magnetic column (112).

7. The magnetic component of claim 6, wherein the first winding (121) is wound on side columns of the first U-shaped magnetic core unit (11) and the first H-shaped magnetic core unit (31), the second winding (122) is wound on side columns of the first H-shaped magnetic core unit (31) and the second H-shaped magnetic core unit (32), and the third winding (123) is wound on side columns of the second H-shaped magnetic core unit (32) and the second U-shaped magnetic core (12).

8. The magnetic component according to claim 7, wherein a first air gap is between the side columns of the first U-shaped magnetic core unit (11) and the first H-shaped magnet core unit (31), and the first winding (121) covers the first air gap;
a second air gap is between the side columns of the first H-shaped magnetic core unit (31) and the second H-shaped magnet core unit (32), and the second winding (122) covers the second air gap; and
a third air gap is between the side columns of the second H-shaped magnetic core unit (32) and the second U-shaped magnet core unit (12), and the third winding (123) covers the third air gap.

9. The magnetic component of claim 1, wherein the magnetic core (110) comprises a first E-shaped magnetic core unit (41), a second E-shaped magnetic core unit (42), a third E-shaped magnetic core unit (43) and a first I-shaped magnetic core unit (21), and three E-shaped magnetic core units (41, 42, 43) are sequentially arranged along the same direction,
wherein the first E-shaped magnetic core unit (41) and a bottom of the second E-shaped magnetic core unit (42) are used to form the first winding window (A), the second E-shaped magnetic core unit (42) and a bottom of the third E-shaped magnetic core unit (43) are used to form the second winding window (B), the third E-shaped magnetic core unit (43) and the first I-shaped magnetic core unit (21) are used to form the third winding window (C),
wherein the bottom of the second E-shaped magnetic core unit (42) is defined as the first common magnetic column (111), and the bottom of the third E-shaped magnetic core unit (43) unit is defined as the second common magnetic column (112),
wherein the first winding (121), the second winding (122) and the third winding (123) are wound on central columns of the first E-shaped magnetic core unit (41), the second E-shaped magnetic core unit (42) and the third E-shaped magnetic core unit (43), respectively.

10. The magnetic component of claim 1, wherein when an alike current flows through the first winding (121), the second winding (122) and the third winding (123), amplitude of magnetic flux through the first common magnetic column (111) and amplitude of magnetic flux through the second common magnetic column (112) are identical to amplitude of magnetic fluxes generated in the magnetic core unit forming the first winding window (A), the magnetic core unit forming the second winding window (B) and the magnetic core unit forming the third winding window (C).

11. The magnetic component of claim 1, wherein no air gap is formed on the first common magnetic column (111) or the second common magnetic column (112).

12. A three-phase LLC resonant converter, comprising the magnetic component according to any one of claims 1-11, wherein
the first winding (121), the second winding (122) and the third winding (123) are used to form primary windings (N_{A}, N_{B}, N_{C}) of a three-phase transformer, respectively; and
the three-phase transformer further comprises a first secondary winding (Nₐ), a second secondary winding (N_{b}) and a third secondary winding (N_{c}), and the first secondary winding (Nₐ), the second secondary winding (N_{b}) and the third secondary winding (N_{c}) are wound on identical magnetic columns as the first winding (121), the second winding (122) and the third winding (123), respectively.

13. The three-phase LLC resonant converter of claim 12, wherein each of the first winding (121), the second secondary winding (122) and the third winding (123) is connected to a resonant capacitor, respectively.

14. The three-phase LLC resonant converter of claim 12, wherein the currents of the first winding (121), the second winding (122) and the third winding (123) are in a phase difference of 120° with each other.

15. The three-phase LLC resonant converter of claim 12, wherein the current comprises at least one of a sine wave, a square wave, a triangular wave and a pulse wave alternating currents.

16. A three-phase inductor, comprising the magnetic component according to any one of claims 1-11.

17. The three-phase inductor of claim 16, wherein the currents of the first winding (121), the second winding (122) and the third winding (123) are in a phase difference of 120° with each other.

18. The three-phase inductor of claim 16, wherein each of the first winding (121), the second winding (122) and the third winding (123) is respectively connected to a resonant capacitor.
